# EUROPÄISCHE PATENTSCHRIFT

(11) **EP 0 714 485 B1**
(45) Veröffentlichungstag und Bekanntmachung des Hinweises auf die Patenterteilung: **29.04.1998**
(21) Anmeldenummer: 94918751.2
(22) Anmeldetag: 24.06.1994
(51) Int. Cl.: F16J 1/16, F02F 3/00

(54) **LEICHTMETALLKOLBEN FÜR HOCHBELASTETE VERBRENNUNGSMOTOREN**
LIGHT METAL PISTON FOR HIGHLY STRESSED INTERNAL COMBUSTION ENGINES
PISTON EN METAL LEGER POUR MOTEURS A COMBUSTION INTERNE TRES SOLLICITES

(30) Priorität: 18.08.1993 DE 4327772
(43) Veröffentlichungstag der Anmeldung: 05.06.1996
(73) Patentinhaber: MAHLE GMBH, D-70376 Stuttgart (DE)
(72) Erfinder: ISSLER, Wolfgang, D-71409 Schwaikheim (DE); KOLLOTZEK, Helmut, D-73557 Mutlangen (DE)
(86) Internationale Anmeldenummer: DE9400747
(87) Internationale Veröffentlichungsnummer: WO9505553

(56) Entgegenhaltungen:
- EP-A- 0 387 931
- FR-A- 1 300 937
- US-A- 3 357 318

## Beschreibung

Die Erfindung betrifft einen Leichtmetallkolben für hochbelastete Verbrennungsmotoren nach dem Oberbegriff des Anspruchs 1.

Bei derartigen aus der Praxis bekannten Leichtmetallkolben sind - um die mechanischen, durch den Zünddruck hervorgerufenen Belastungen aushalten zu können - verschiedene Vorkehrungen getroffen worden, um einerseits insbesondere die Durchbiegung des Kolbenbolzens, die zu Rissen in den Kolbenbolzennaben führen kann, zu verringern und andererseits die Brennraummulde gegen Anrisse zu schützen. Hierzu werden derartige Leichtmetallkolben beispielsweise mit Buchsen in den Bohrungen der Kolbenbolzennaben und die Brennraummulde mit einer zusätzlichen Bewehrung versehen.

Aus der DE-PS 36 09 019 ist zur Vermeidung von Nabenanrissen bekannt, in die Nabenbohrungen jeweils beidseitig taschenförmige Ausnehmungen vom inneren Ende der Nabenbohrungen her einzubringen, die sich über eine gewisse Länge in Nabenbohrungslängsrichtung erstrecken. Eine Verbindung zwischen diesen Ausnehmungen und dem kolbenaußenseitigen Ende der Nabenbohrung wird durch entsprechende Nuten in den Nabenbohrungen sichergestellt.

Problem der vorliegenden Erfindung ist es, auf konstruktiv einfache Weise einen Kolben zu finden, bei dem die Spannungen am Rand der Brennraummulde niedrig gehalten werden, ohne dabei die Spannungen in den Kolbenbolzennaben unnötig zu erhöhen.

Gelöst wird dieses Problem mit einem Leichtmetallkolben mit den Merkmalen nach dem Kennzeichen des Anspruchs 1.

Vorteilhafte Ausgestaltungen der Erfindung sind in den Unteransprüchen enthalten.

Die Erfindung ist anhand eines bevorzugten, in der Zeichnung dargestellten Ausführungsbeispiels näher erläutert.

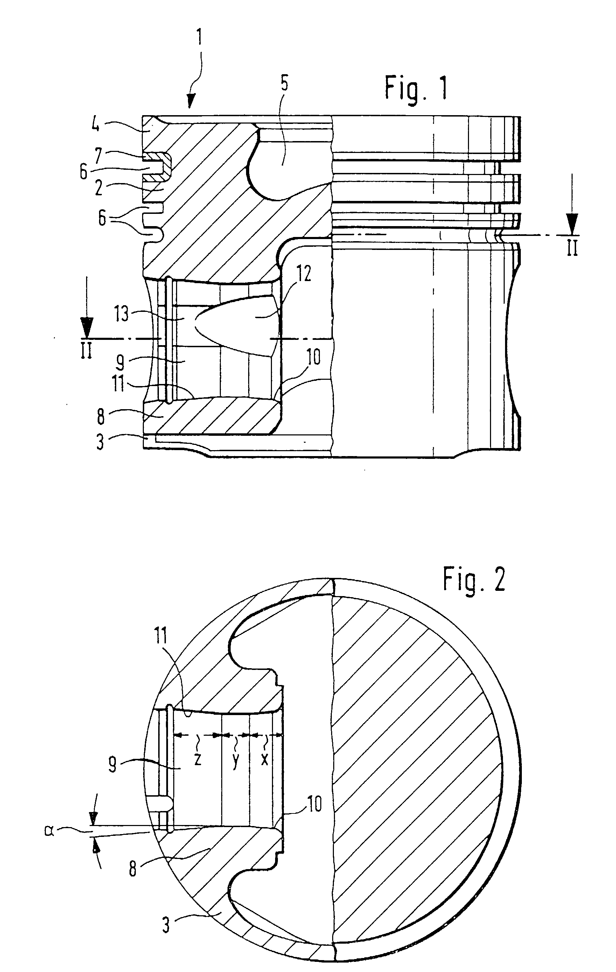

Es zeigen
- Fig. 1: einen erfindungsgemäßen Leichtmetallkolben in Seitenansicht teilweise im Schnitt
- Fig. 2: eine Draufsicht im Schnitt II-II nach Fig. 1

Ein Leichtmetallkolben 1 für einen Verbrennungsmotor, insbesondere hochbelasteter Dieselmotor für ein Kraftfahrzeug, besteht einstückig aus einem Kolbenkopf 2 und einem Kolbenschaft 3. In einem Kolbenboden 4 des Kolbenkopfes 2 sind eine unbewehrte Brennraummulde 5 sowie Ringnuten 6 eingeformt, wobei die oberste Ringnut 6 mit einem Ringträger 7 bewehrt ist. In den Kolbenschaft 3 sind die Kolbenbolzennaben 8 integriert, die zur Aufnahme eines Kolbenbolzens (nicht gezeichnet) Bohrungen 9 aufweisen. Jede Bohrung 9 ist an ihrem inneren Ende 10 in einem Teilbereich X zum inneren Ende hin aufgeweitet (bombiert), wobei die Krümmung dieser Aufweitung als Polygon ausgebildet sein kann. Der Übergang dieser Aufweitung in die Stirnfläche der Nabe erfolgt mit einem Radius von 3 mm, wobei die axiale Länge der Ausrundung in Kolbenbolzenlängsrichtung 1 mm bei einem Kolben mit einem Durchmesser von 80 mm beträgt. Außerdem ist die Bohrung 9 in einem Teilbereich Z als Formbohrung 11 ausgeführt, die sich in dem von außen nach innen verlaufenden, dem tragenden Bereich - der nach außen durch die Nut für den Sicherungsring des Kolbenbolzens begrenzt wird-entsprechenden Teilbereich Z von innen nach außen konisch aufweitet, z.B. trompetenförmig. Die Aufweitung (in der Zeichnung übertrieben groß dargestellt) erfolgt unter einem Winkel Alpha von 5 Minuten. Die Aufweitung, die sich in einem Winkel von 2 - 10 Minuten bewegen soll, kann auch stufenförmig erfolgen, wobei die Aufweitung im weiter innen liegenden Teilbereich Z der Formbohrung 11 einen kleineren Winkel als im weiter außen liegenden Bereich der Formbohrung 11 aufweisen soll.

Zwischen der sich nach außen konisch aufweitenden Formbohrung 11 im Teilbereich Z und der am inneren Ende 10 im Teilbereich X der Bohrung vorgesehenen Aufweitung (Bombierung) weist die Bohrung 9 einen zylindrisch verlaufenden Bereich Y auf.

Weiterhin ist in die Bohrung 9 jeder Kolbenbolzennabe 8 einseitig, und zwar in Richtung Gegendruckseite, eine vom inneren Ende 10 der Bohrung 9 ausgehende schräge taschenförmige Ausnehmung (Tasche 12) eingeformt, die bezüglich ihrer Höhenlage unsymmetrisch zur Kolbenbolzenlängsachse liegt, ihre größte Tiefe am inneren Ende 10 der Bohrung 9 aufweist und nach etwa 2/3 der Länge der Bohrung 9 in die Oberfläche der Formbohrung 11 ausläuft. Eine Verbindung zwischen der schrägen Tasche 12 und dem kolbenaußenseitigen Ende der Bohrung 9 bildet eine in Kolbenbolzenlängsache verlaufende Nut 13.

Mit einer derartigen Ausführung wird auf konstruktiv einfache Weise ein Leichtmetallkolben geschaffen, der durch die Kombination seiner Merkmale einen optimierten Kompromiß bezüglich ertragbarer Spannungen aufgrund erhöhten Zünddrucks für Muldenrand, Abstützung und Kolbenbolzennaben darstellt.

## Patentansprüche

1. Leichtmetallkolben (1) für hochbelastete Verbrennungsmotoren, bestehend aus einem den Kolbenboden (4) mit Brennraummulde (5) und die Ringnutenpartie (6) aufnehmenden Kolbenkopf (2) und einem Kolbenschaft (3) mit integrierten Kolbenbolzennaben (8), der durch die Kombination folgender Merkmale **gekennzeichnet** ist:
a) die Brennraummulde (5) im Kolbenboden (4) ist unbewehrt
b) die Bohrung (9) jeder Kolbenbolzennabe (8) ist wenigstens in einem Teilbereich X der gesamten Nabenbohrungslänge an ihrem inneren Ende (10) zum inneren Ende hin aufgeweitet (bombiert)
c) die Bohrung (9) jeder Kolbenbolzennabe (8) ist als Formbohrung (11) ausgeführt, die sich wenigstens in einem von außen nach innen verlaufenden, dem tragenden Bereich entsprechenden Teilbereich Z der gesamten Nabenbohrungslänge von innen nach außen im wesentlichen konisch erweitert
d) die Bohrung (9) jeder Kolbenbolzennabe (8) weist einseitig eine von ihrem inneren Ende (10) ausgehende schräge Tasche (12) auf
e) der bei der Verbrennung entstehende Zünddruck ist größer als 120 bar.

2. Leichtmetallkolben nach Anspruch 1,
dadurch **gekennzeichnet,**
daß die Krümmung der Aufweitung im Teilbereich X am inneren Ende (10) als Polygon ausgebildet ist.

3. Leichtmetallkolben nach Anspruch 1 oder 2,
dadurch **gekennzeichnet,**
daß die Bohrung (9) der Kolbenbolzennabe (8) im Teilbereich Z von innen nach außen trompetenförmig aufgeweitet ist.

4. Leichtmetallkolben nach einem der vorhergehenden Ansprüche,
dadurch **gekennzeichnet,**
daß die Bohrung (9) der Kolbenbolzennabe (8) im Teilbereich Z eine Aufweitung mit einem Winkel Alpha von 2-10 Minuten aufweist.

5. Leichtmetallkolben nach einem der vorhergehenden Ansprüche,
dadurch **gekennzeichnet,**
daß die Aufweitung der Bohrung (9) der Kolbenbolzennabe (8) im Teilbereich Z stufenförmig erfolgt.

6. Leichtmetallkolben nach Anspruch 5,
dadurch **gekennzeichnet,**
daß die Aufweitung der Bohrung (9) der Kolbenbolzennabe (8) im Teilbereich Z innen einen kleineren Winkel als die weiter außen gelegene Aufweitung aufweist.

7. Leichtmetallkolben nach Anspruch 6,
dadurch **gekennzeichnet,**
daß die im Teilbereich Z gelegene innere Aufweitung einen Winkel von 2 - 4 Minuten und die äußere Aufweitung einen Winkel von 5 - 10 Minuten aufweist.

8. Leichtmetallkolben nach einem der vorhergehenden Ansprüche,
dadurch **gekennzeichnet,**
daß die Bohrung (9) zwischen der im wesentlichen sich konisch nach außen erweiternden Formbohrung (11) im Teilbereich Z und der an ihrem inneren Ende (10) im Teilbereich X vorgesehenen Aufweitung einen zylindrischen Bereich Y aufweist.

9. Leichtmetallkolben nach einem der vorhergehenden Ansprüche,
dadurch **gekennzeichnet,**
daß die einseitig schräge Tasche (12) in der Bohrung (9) der Kolbenbolzennabe (8) auf der Seite der Gegendruckrichtung liegt.

10. Leichtmetallkolben nach einem der vorhergehenden Ansprüche,
dadurch **gekennzeichnet,**
daß die größte Tiefe der schrägen Tasche (12) am inneren Ende (10) der Kolbenbolzennabe (8) liegt.

11. Leichtmetallkolben nach einem der vorhergehenden Ansprüche,
dadurch **gekennzeichnet,**
daß die schräge Tasche (12) unter einem Winkel von 2-5 Grad zu einer Ebene parallel zur Kolbenbolzenlängsachse eingeformt ist.

12. Leichtmetallkolben nach einem der vorhergehenden Ansprüche,
dadurch **gekennzeichnet,**
daß die schräge Tasche (12) bezüglich ihrer Höhenlage unsymmetrisch zur Kolbenbolzenlängsachse angeordnet ist.

## Claims

1. Light metal piston (1) for highly stressed internal combustion engines, comprising a piston base (4) with combustion chamber cavity (5) and piston head (2) receiving the annular groove section (6) and a piston shaft (3) with integrated piston pin hubs (8), said piston being characterised by the combination of the following features:
a) the combustion chamber cavity (5) in the piston base (4) is not reinforced
b) the bore (9) of each piston pin hub (8) is widened (bowed) at its inner end (10) towards the inner end at least in a portion X of the entire hub bore length
c) the bore (9) of each piston pin hub (8) is constructed as a form bore (11), which is widened outwards from the inside in an essentially conical shape at least in a portion Z of the entire hub bore length running from the outside inwards corresponding to the bearing region
d) the bore (9) of each piston pin hub (8) has an oblique pocket (12) extending from its inner end (10)
e) the ignition pressure occurring during combustion is greater than 120 bar.

2. Light metal piston according to Claim 1, characterised in that in the portion X the curvature of the widened portion is in the shape of a polygon at the inner end (10).

3. Light metal piston according to Claim 1 or 2, characterised in that in the portion Z the bore (9) of the piston pin hub (8) is widened outwards from the inside in a trumpet shape.

4. Light metal piston according to one of the preceding claims, characterised in that in the portion Z the bore (9) of the piston pin hub (8) has an angle alpha of 2-10 minutes.

5. Light metal piston according to one of the preceding claims, characterised in that in the portion Z the widening of the bore (9) of the piston pin hub (8) is achieved in step form.

6. Light metal piston according to Claim 5, characterised in that in the portion Z the widened portion of the bore (9) of the piston pin hub (8) has a smaller angle on the inside than the widened portion located further outwards.

7. Light metal piston according to Claim 6, characterised in that the inner widened portion located in the portion Z has an angle of 2-4 minutes and the outer widened portion has an angle of 5-10 minutes.

8. Light metal piston according to one of the preceding claims, characterised in that the bore (9) between the form bore (11), which widens essentially conically outwards, in the portion Z and the widened portion provided at its inner end (10) in portion X has a cylindrical region Y.

9. Light metal piston according to one of the preceding claims, characterised in that pocket (12) oblique on one side in the bore (9) of the piston pin hub (8) lies on the side of the counterpressure direction.

10. Light metal piston according to one of the preceding claims, characterised in that the greatest depth of the oblique pocket (12) lies on the inner end (10) of the piston pin hub (8).

11. Light metal piston according to one of the preceding claims, characterised in that the oblique pocket (12) is moulded in at an angle of 2-5 degrees to a plane parallel to the longitudinal axis of the piston pin.

12. Light metal piston according to one of the preceding claims, characterised in that the oblique pocket (12) is arranged asymmetric to the longitudinal axis of the piston pin with respect to its height.

## Revendications

1. Piston en métal léger (1) pour des moteurs à combustion interne très sollicités, composé d'une tête de piston (2), qui reçoit le fond de piston (4) avec le creux de la chambre de combustion (5) et le jeu de rainures annulaires (6), et d'une tige de piston (3) avec des moyeux intégrés (8) d'axes de piston, caractérisé par la combinaison de caractéristiques suivantes:
a) le creux de la chambre de combustion (5) dans le fond de piston (4) n'est pas armé,
b) l'alésage (9) de chaque moyeu d'axe de piston (8) est élargi (cambré) sur son extrémité interne (10) en direction de l'extrémité interne , au moins dans une zone partielle X de la totalité de la longueur des alésages de moyeux,
c) l'alésage (9) de chaque moyeu d'axe de piston (8) est réalisé sous forme d'alésage profilé (11), qui s'élargit essentiellement en cône de l'intérieur vers l'extérieur, au moins dans une zone partielle Z de la totalité de la longueur des alésages de moyeux, s'étendant de l'extérieur vers l'intérieur et correspondante à la zone porteuse ,
d) l'alésage (9) de chaque moyeu d'axe de piston (8) présente unilatéralement une poche oblique (12), qui part de son extrémité interne (10),
e) la pression d'allumage, générée lors de la combustion, est supérieure à 120 bars.

2. Piston en métal léger suivant la revendication 1, caractérisé en ce que la courbure de l'élargissement dans la zone partielle X est réalisée sous forme de polygone, sur l'extrémité interne (10).

3. Piston en métal léger suivant l'une des revendications 1 et 2, caractérisé en ce que l'alésage (9) du moyeu (8) de l'axe de piston est élargi en forme de trompette dans la zone partielle Z, de l'intérieur vers l'extérieur.

4. Piston en métal léger suivant l'une des revendications précédentes, caractérisé en ce que l'alésage (9) du moyeu (8) de l'axe de piston présente, dans la zone centrale Z, un élargissement d'un angle alpha de 2 à 10 minutes.

5. Piston en métal léger suivant l'une des revendications précédentes, caractérisé en ce que l'élargissement de l'alésage (9) du moyeu (8) de l'axe de piston est assuré en gradins dans la zone partielle Z.

6. Piston en métal léger suivant la revendication 5, caractérisé en ce que l'élargissement de l'alésage (9) du moyeu (8) de l'axe de piston présente, dans la zone partielle Z, un angle côté interne inférieur à celui de l'élargissement plus externe.

7. Piston en métal léger suivant la revendication 6, caractérisé en ce que l'élargissement interne, situé dans la zone partielle Z, présente un angle de 2 à 4 minutes, l'élargissement externe présentant un angle de 5 à 10 minutes.

8. Piston en métal léger suivant l'une des revendications précédentes, caractérisé en ce que l'alésage (9) présente une zone cylindrique Y entre l'alésage profilé (11), s'étendant essentiellement en cône vers l'extérieur dans la zone partielle Z, et l'élargissement prévu sur son extrémité interne (10), dans la zone partielle X.

9. Piston en métal léger suivant l'une des revendications précédentes, caractérisé en ce que la poche oblique (12) unilatérale se situe dans l'alésage (9) du moyeu (8) de l'axe de piston, en direction du côté contre-pression.

10. Piston en métal léger suivant l'une des revendications précédentes, caractérisé en ce que la profondeur maximale de la poche oblique (12) se situe sur l'extrémité interne (10) du moyeu (8) de l'axe de piston.

11. Piston en métal léger suivant l'une des revendications précédentes, caractérisé en ce que la poche oblique (12) est conformée sous un angle de 2 à 5 degrés par rapport à un plan parallèle à l'axe longitudinal de l'axe de piston.

12. Piston en métal léger suivant l'une des revendications précédentes, caractérisé en ce que la poche oblique (12) a une disposition asymétrique, quant à sa position en hauteur, par rapport à l'axe longitudinal de l'axe de piston.
